# EUROPÄISCHE PATENTANMELDUNG

(11) **EP 3 150 304 A1**
(43) Veröffentlichungstag der Anmeldung: **05.04.2017**
(21) Anmeldenummer: 16172261.6
(22) Anmeldetag: 31.05.2016
(51) Int. Cl.: B22F 5/10, B22F 7/06, C22C 1/04, C22C 33/02

(54) **VERFAHREN ZUR HERSTELLUNG EINES VENTILSITZRINGES**

(30) Priorität: 23.06.2015 DE 102015211623
(71) Anmelder: Mahle International GmbH, 70376 Stuttgart (DE)
(72) Erfinder: BEERENS, Christoph, 70193 Stuttgart (DE); HECKENDORN, Heiko, 79650 Schopfheim (DE); SCHOLL, Dr. Roland, 79725 Laufenburg (DE); WINTRICH, Klaus, 79650 Schopfheim (DE)
(74) Vertreter: BRP Renaud & Partner mbB Rechtsanwälte Patentanwälte Steuerberater

(57) **Zusammenfassung**

Die Erfindung betrifft ein Verfahren zur Herstellung eines Ventilsitzrings (4) aus einem ersten Werkstoff (2) und einem zweiten Werkstoff (3), bei dem
- die beiden Werkstoffe (2,3) durch Zerstäuben einer Metallschmelze so verarbeitet werden, dass sie eine mittlere Partikelgröße von ca. 5 bis 13 µm aufweisen,
- die nun pulverförmigen Werkstoffe (2,3) zu jeweils einem fließfähigen Granulat mit einer Granulatgröße von im Wesentlichen kleiner als < 300 µm, vorzugsweise < 150 µm, und von größer als 15 µm verarbeitet werden,
- ein Anteil von 1 bis 5 Gew.-% organischer Presshilfsmittel beigemischt wird,
- beide Granulate nacheinander in ein Presswerkzeug eingefüllt und anschließend einachsig mit einem Pressdruck (p) von 400 < p < 700 MPa gepresst werden,
- die organischen Presshilfsmittel durch Erhitzen bei 50 °C < t < 700 °C entfernt werden,
- der Ventilsitzring (4) vorgesintert und fertiggesintert wird.

## Beschreibung

Die Erfindung betrifft ein Verfahren zur Herstellung eines Ventilsitzringes, aus einem ersten Werkstoff und einem zweiten Werkstoff. Die Erfindung betrifft außerdem einen nach diesem Verfahren hergestellten Ventilsitzring.

In Thomazic, A.... Kamdem, Y.: "Fabrication of Bimaterial Components by Conventional Powder Metallurgy", PM2010 World Congress - Tools for Improving PM II- Design Test & Evaluation; Bouvard, Didier (Grenoble INP/CNRS) "Fabrication of Bimaterial Components by Conventional Powder Metallurgy", Vol.5, p.25, wird ausführlich die pulvermetallurgische Herstellung von Bimaterialien, also Bauteilen, die aus zwei unterschiedlichen Werkstoffen aufgebaut sind, beschrieben. Danach ist es möglich, Pulver aus zwei unterschiedlichen Materialien nacheinander in eine Kavität einzufüllen und dann gemeinsam durch Pressen zu einem handhabbaren Körper (grüner Pressling) zu verarbeiten. In dem beschriebenen Fall wird als erster Werkstoff eine harte und feste Komponente aus Eisen basiertem WC-Hartmetall (WC-Fe) verwendet und als zweiter Werkstoff ein zäher auf Eisen basierender Werkstoff (Fe). Die Verdichtung bei 600 MPa führt bei WC-Fe-Material zu einer Gründichte von 69 % TD und beim Fe-reichen Werkstoff zu 74 %TD (TD: theoretische Dichte des Werkstoffes). Nach dem gemeinsamen uniaxialen Pressen bei 600 MPa entsteht ein Formkörper, der nach dem Sintern eine feste Verbindung beider Materialien zulässt. Um die Eignung der verwendeten pressfertigen Granulate zu bewerten und um die Bildung der Verbindung der beiden Materialien zu verstehen, wurden Verdichtungskurven gemessen. Die gewählten Pulverzusammensetzungen werden einerseits so gewählt, dass sich die anfänglichen Werkstoffdichten nur geringfügig unterscheiden und diese während des Sinterns auf einen annähernd gleichen Endwert der Dichte ansteigen.

Zu beobachten ist dabei, dass die Verläufe der Dichteänderung sich im Bereich mittlerer Temperaturen signifikant unterscheiden. Dies muss zwangsläufig zu mechanischen Spannungen im Bereich der Verbundstelle beider Werkstoffe führen.

Weiterhin wird beschrieben, dass es relevant ist, welcher der beiden Werkstoffe zuerst bei der Erzeugung eines Schichtpresskörpers in die Kavität eingefüllt wurde, was auf Werkstoffwechselwirkungen untereinander und mit der Matrize hindeutet.

Die Auswertung der Dichteverteilung nach dem Pressen und die nach dem Sintern im Bauteil beobachteten Risse zeigen jedoch, dass die pulvertechnologische Herstellung von Ventilsitzringen aus zwei Werkstoffen technisch nur schwierig zu beherrschen ist. Dennoch gibt es zahlreiche Anwendungen, bei denen solche Werkstoffkombinationen technische Vorteile bieten würden.

Die vorliegende Erfindung beschäftigt sich daher mit dem Problem, ein verbessertes Verfahren anzugeben, mittels welchem Ventilsitzringe aus zwei Werkstoffen hergestellt werden können, ohne die aus dem Stand der Technik bekannten Nachteile.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, dass zur Herstellung eines Ventilsitzrings als erstes ein Funktionswerkstoff ausgewählt wird, der sich bereits als Ventilsitzring, insbesondere unter harschen Einsatzbedingungen im Zylinderkopf eines Verbrennungsmotors bewährt hat. In einem nächsten Schritt wird ein zweiter Werkstoff ausgewählt, der während der pulvertechnologischen Verarbeitung - insbesondere durch Sintern - eine Verbindung mit dem ersten Werkstoff ohne Schädigung in der Fügezone zulässt und der, aufgrund seiner mechanischen Eigenschaften, wie hinreichende Warmfestigkeit, ähnlicher Ausdehnungskoeffizient etc., als Träger des ersten (Funktions-)Werkstoffes fungieren kann. Indem erfindungsgemäß aus beiden Werkstoffen feine Pulver hergestellt und granuliert werden, sind die technischen Voraussetzungen gegeben, einen entsprechenden Bimaterial-Werkstoff als Schichtbauteil über Pressen und Sintern herzustellen. Erfindungsgemäß weist dabei der erste Werkstoff ca. 15 bis 30 Gew.-% Molybdän, ca. 5 bis 30 Gew-% Chrom, 0 bis 5 Gew-% Silizium, 0 bis 2 Gew.-% Kohlenstoff, und bis zu 5 Gew.-% andere Elemente und dem Restanteil aus Cobalt, und der zweite Werkstoff ca. 10-12 Gew.-% Cr, 0,4-0,8 Gew.-% Mn, 0,5-1 Gew-% Si, 0,5-0,9 Gew.-% C, ca. 3 Gew.-% andere Elemente und Rest Fe auf.

Die beiden Werkstoffe werden durch Zerstäuben einer Metallschmelze hergestellt, wodurch sie eine mittlere Partikelgröße von ca. 5 bis 13 µm erreichen. Anschließend werden die pulverförmigen Werkstoffe zu jeweils einem fließfähigen Granulat mit einer Granulatgröße von im Wesentlichen kleiner als < 300 µm, vorzugsweise < 150 µm, und von größer als 15 µm verarbeitet, insbesondere über Wirbelschichtgranulation, Sprühtrocknung oder Siebgranulation, verarbeitet, wobei ein Anteil von 1 bis 5 Gew.-%, insbesondere von 4.-Gew.%, organischer Presshilfsmittel, in Form eines langkettigen Kohlenwasserstoffes (Paraffin), der die Partikel untereinander bindet und gleichzeitig das Abgleiten der Pulverteilchen untereinander und gegenüber der Wandung der Pressmatrize erleichtert eingebracht wird. Beide Granulate werden nun nacheinander in ein Presswerkzeug eingefüllt und anschließend einachsig mit einem Pressdruck p von 400 < p < 700 MPa gepresst, wobei die organischen Presshilfsmittel durch Erhitzen bei 50 °C < t < 700 °C entfernt werden. Der Ventilsitzring wird nun vorgesintert und anschließend fertiggesintert, wobei insbesondere bei einer Temperatur t von 1.110 °C < t < 1.130 °C vorgesintert und anschließend bei einer Temperatur t ca. 1.240 °C fertiggesintert wird.

Bei einer besonders bevorzugten Ausführungsform wird als erster Werkstoff eine Legierung ausgewählt, die folgende Elemente enthält: 23 Gew.-% Mo, 16 Gew.-% Cr, 1 Gew.-% Si, 2 Gew-% Fe, 0,5 Gew.-%C, ca. 3 Gew.-% andere Elemente und Rest Co. Als zweiter Werkstoff wird eine Legierung gewählt, die 11 Gew.-% Cr, 0,6 Gew.-% Mn, 0,7 Gew-% Si, 0,7 Gew.-%C, ca. 2 Gew.-% andere Elemente und Rest Fe enthält. Diese werden zu feinen Pulvern durch bekannte Verfahren mit einer mittleren Partikelgröße von ca. 5 bis 13 µm durch Zerstäuben einer Metallschmelze hergestellt. Nachdem diese Pulver zu einem gut fließfähigen Granulat (Fülldichte: ca. 2,4 g/cm³; Granulatgröße: < 150 µm (100 mesh) und vorzugsweise von größer als 15 µm, mit einem Anteil von 1 bis 5 Gew.-% organischer Bestandteile (Presshilfsmitteln) verarbeitet wurden, werden beide Pulver nacheinander in ein Presswerkzeug (Ring) eingefüllt und dann bei einem Pressdruck p von 400 bis 700 MPa gemeinsam uniaxial, also einachsig, gepresst. Sie erreichen dann, je nach verwendetem Pressdruck, eine relative Werkstoffdichte in den Einzelschichten von 65 bis ca. 80 % TD (TD: theoretische Dichte des Werkstoffes). Um derartige Werkstoffe entsprechend den an die Anwendung (hohe Festigkeit, keine offene Porosität) gestellten Mindestanforderungen herzustellen, werden sie zuerst entbintert (entfernen der organischen Hilfsstoffe, insbesondere des Presshilfsmittels in einem Temperaturbereich von 50 °C bis ca. 700 °C) und so gesintert, dass beide Komponenten zumindest eine Dichte von 93 % TD (TD: theoretische Dichte des Werkstoffes) erreichen. Um dies sicher zu stellen, ist eine lineare Schwindung von ca. 6 bis 12 % erforderlich. Während des "Sinterns" rücken dabei die Partikel enger zusammen und verbleiben in dieser Stellung. Dies ist mit einer Änderung der Länge in allen Raumrichtungen, hier um 6-12 %, verbunden. Bei gleicher Masse (Binder ist entfernt) wird das Volumen reduziert und demnach die Dichte bis zu den angegebenen Werten > 93 % TD erhöht. Dabei werden Hohlräume (Poren) zwischen den Partikeln stark reduziert, 7 bis 0 %, was einer Dichte von 93 bis 100 % TD entspricht. Wenn darüber hinaus noch eine Grenzfläche zwischen den Werkstoffen vorliegt, die keine Schädigungen (Risse, harte oder spröde Verbindungen) aufweisen, ist die zuverlässige pulvertechnologische Herstellung eines Ventilsitzrings aus zwei unterschiedlichen Werkstoffen realisiert.

Neben der eigentlichen Herstellung des Bimaterial-Bauteils liefert die oben beschriebene Kombination eines Werkstoffes einer Co-basierten Legierung und einem Fe-basierten Werkstoff noch einen überraschenden und damit nicht erwarteten Vorteil gegenüber der technisch genutzten Variante gegossener Ventilsitzringe aus Co-Legierungen gemäß Stand der Technik. Durch die geschickte Kombination dieser Werkstoffe, nämlich einem "einfachen, kostengünstigen, weniger warmfesten" und einem "komplexen, teuren und warmfesten", die sich im linearen thermischen Ausdehnungskoeffizienten (CTE), der Wärmeleitfähigkeit (WLF), dem E-und Schub-Modul und den Kriecheigenschaften im Bereich der Anwendungstemperaturen in gewünschter Weise unterscheiden, wird erreicht, dass der Ventilsitzring bessere Funktionseigenschaften liefert als die für die Anwendung bisher als besonders geeignet geltenden gegossenen Co-basierten Werkstoffe. Dies äußert sich im Vergleich des Relaxationsverhaltens - das heißt, der Veränderung der Form und Größe des Ventilsitzrings im Verlaufe des technischen Einsatzes - des reinen Funktionswerkstoffes (erster Werkstoff) auf Co-Basis (gegossen oder gesintert) zum gesinterten Co-Basis/Fe-Basis-Ventilsitzring (Bimaterial) bei gleichen Einsatzbedingungen.

Im Detail nimmt durch die verwendete Werkstoffkombination die "Überdeckung" des Ventilsitzrings im Vergleich zum reinen Funktionswerkstoff weniger stark ab, was zu einer höheren Sicherheit vor dem "Herausfallen" (Presspassung) des Ventilsitzrings aus der Aufnahmebohrung des Zylinderkopfes als Folge der Relaxation führt.

Im konkreten Fall, z.B. bei einem Auslassventil eines Verbrennungsmotors, ist es erforderlich, den Ventilsitzring (VSR) in eine vorgefertigte und exakt positionierte Bohrung des Zylinderkopfes einzupressen. Ventilsitzringe haben nach der Herstellung einen definiert größeren Durchmesser (+20 bis ca. +80 µm) - auch "Überdeckung" genannt - als die Bohrung. Zum Einbau des VSR wird zum Beispiel der Ventilsitzring soweit abgekühlt, dass sein "kalter" Durchmesser kleiner ist als der Durchmesser der Bohrung im "warmen" Zustand. So lässt er sich leicht in die vorbereitete Bohrung einpressen. Nach dem Angleichen der Temperatur von VSR- und Zylinderkopf befindet sich der VSR in einer Presspassung in einem vorausberechneten Spannungstand und ist somit gegen Herausfallen gesichert. Diese Spannung ändert sich während des Betriebes des Verbrennungsmotors aufgrund des komplexen Beanspruchungszustandes mit dem Wärmestrom, der über Ventil und VSR in den Zylinderkopf fließt, mit den thermischen Ausdehnungskoeffizienten (CTE), mit den E-und Schub-Moduli, mit den Wärmeleitfähigkeiten und mit den übrigen temperaturabhängigen mechanischen Eigenschaften (Festigkeit, Kriechverhalten) und führt auf diese Weise zu einer spannungsinduzierten Formänderung im Betrieb, hier auch als Relaxation bezeichnet. Durch diese Relaxation ändert sich der Eigenspannungszustand des VSR, ein homogener Werkstoff unterscheidet sich dabei von einem der schichtweise aufgebaut ist erheblich, wie dies in dieser Erfindung beschrieben ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Dabei zeigen, jeweils schematisch

- Fig. 1: Vergleich der Form von Schichtpresslingen nach dem Entbindern /Vorsintern (rechts) und nach dem Dichtsintern (links); die Co-basierte Legierung (erster Werkstoff) befindet sich oben, die Fe-basierte (zweiter Werkstoff unten,
- Fig. 2: Gefüge des gesinterten Schichtverbundes: Eisenbasiswerkstoff (oben), Übergangsbereich zwischen Eisenbasis und Cobaltbasis (Mitte) und Funktionswerkstoff Cobaltbasis (unten) nach dem Sintern,
- Fig. 3: Eisenbasiswerkstoff in unterschiedlichen Vergrößerungen (oben) und Übergangszone zwischen Eisenbasis und Cobaltbasis (unten) nach dem Sintern,
- Fig. 4: Motornaher Relaxationstest eines gesinterten ersten Werkstoffes (Cobaltbasis),
- Fig. 5: Motornaher Relaxationstest eines gegossenen Cobaltbasis-Werkstoffes,
- Fig. 6: Motornaher Relaxationstest eines gesinterten Werkstoffverbunds zwischen Cobaltbasis und ungeeignetem Eisenbasis-Werkstoff.

Ein Verbundbauteil 1, insbesondere ein Ventilsitzring 4, kann mit dem erfindungsgemäßen Verfahren beispielsweise wie folgt hergestellt werden: Zunächst werden Granulate aus einem Co-Basis-Werkstoff (erster Werkstoff 2) und einem Fe-Basis-Werkstoff (zweiter Werkstoff 3) durch Verdüsen einer Metallschmelze gewonnen und dann in ein ringförmiges Presswerkzeug φₐ=50 mm, φᵢ=35 mm eingefüllt. Dazu werden ca. 40 g des Co-basierten Granulates und ca. 37 g des Fe-basierten Granulates nacheinander in die Kavität des Presswerkzeuges eingefüllt und bei einem Druck von 520 MPa gepresst. Bei diesem Druck erreicht das das Co-basierte Pulver (erster Werkstoff 2) eine Werkstoffdichte von 5,85 g/cm3 (67 %TD) und das Fe-basierte Pulver (zweiter Werkstoff 2) 5,5 g/cm3 (70,5 %TD).

Parallel zu den erfindungsgemäßen Ventilsitzringen 4 (Schichtpresslingen) wurden als Referenz Formkörper aus den reinen Pulvern, bzw. Granulaten, hergestellt, um eine Aussage zum freien Sintern - ohne etwaige Behinderung durch die Wechselwirkung mit dem Verbundpartner - zu erhalten.

In einem ersten Schritt erfolgt in einem technischen Durchlaufofen (Aufheizen: 3 bis 5 K/min; Tsinter: 1110 bis 1130°C; Haltezeit: ca. 25 bis 35 min; Atomosphäre; N2-H2 (5 bis 20 % H2), Abkühlung auf Raumtemperatur: 5 bis 10 K/min) die Entfernung der organischen Hilfsstoffe und das "Vorsintern" (zur Verbesserung der Handhabbarkeit) der Formkörper. In einem zweiten Schritt erfolgt das Fertigsintern (Aufheizen: 5 bis 10 K/ min; Tmax: 1240°C; Haltezeit: 50-60 min; Abkühlen auf Raumtemperatur: ca. 20 bis 10 K/min; Atomsphären: N2-H2 (5 bis 20 % H2): RT bis 1100°C, Vakuum: von 1100 bis 1240 °C, Abkühlung: (5 bis 20 % H2)).

Die Auswertung für die Co-Basis-Referenzprobe ergab eine Sinterdichte von 8,2 bis 8,55 g/cm3 (94 bis ca. 98 %TD). Die Härte (HRC) betrug 45 und 53. Der Fe-basierte Referenzwerkstoff erreichte eine Sinterdichte von 7,2 bis 7,6 g/cm3 (92 bis 97 % TD) und Härten (HRC) von 49 bis 50, wobei in beiden Fällen die Unterschiede durch die Lage, und damit die tatsächliche Sintertemperatur und wirkende Sinterzeit zu erklären ist.

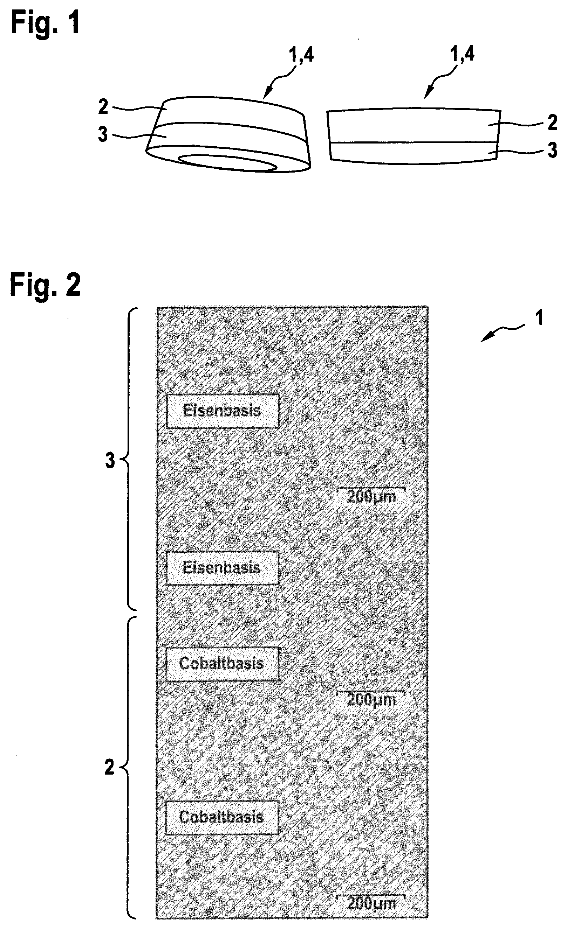

Die Schichtpresskörper (Ventilsitzring 4) zeigen während des Sinterverlaufes eine Formänderung. Bei dem gewählten System tritt eine Umkehr der Schwindungsdifferenz vom Vorsintern (1120°C) zum Dichtsintern (1240°C) auf, was in Fig. 1 an der sich umkehrenden Konizität sichtbar wird. Nach dem Vorsintern (Fig. 1 rechts) lag eine etwas stärkere Schwindung des Fe-basierten Bereiches (zweiter Werkstoff 3) vor, nach dem Dichtsintern ist die Schwindung des Co-basierten Bereiches (erster Werkstoff 2) größer (Fig. 1 links).

Dies suggeriert aber auch, dass für das Erreichen enger Toleranzen eine bessere Abstimmung des Schwindungsverhaltens beider Pulver (Werkstoffe 2 und 3) erforderlich ist. Schwindungsunterschiede während des Sinterns führen nicht nur aufgrund der Differenz in den Endschwindungen zu einer konischen Verformung des Verbundbauteils 1, insbesondere des Ventilsitzringes 4. Insbesondere während unterschiedlicher Schwindungsmaxima (also unterschiedlichen Schwindungsverläufe) der beiden Werkstoffe 2, 3 werden nicht reversible Verformungen erreicht, die auch im Falle gleicher Endschwindungen zu höheren Toleranzen führen. Die Konizität stellt für den Nachweis der Funktion im Sinne dieser Erfindung keine Einschränkung dar, da die Ventilsitzringe 4 durch spanende Bearbeitung aus dem Sinterkörper hergestellt werden können. Verbesserungen im Sinterprozess, die zu engeren Toleranzen führen, können Gegenstand von Verbesserungen dieser Erfindung sein.

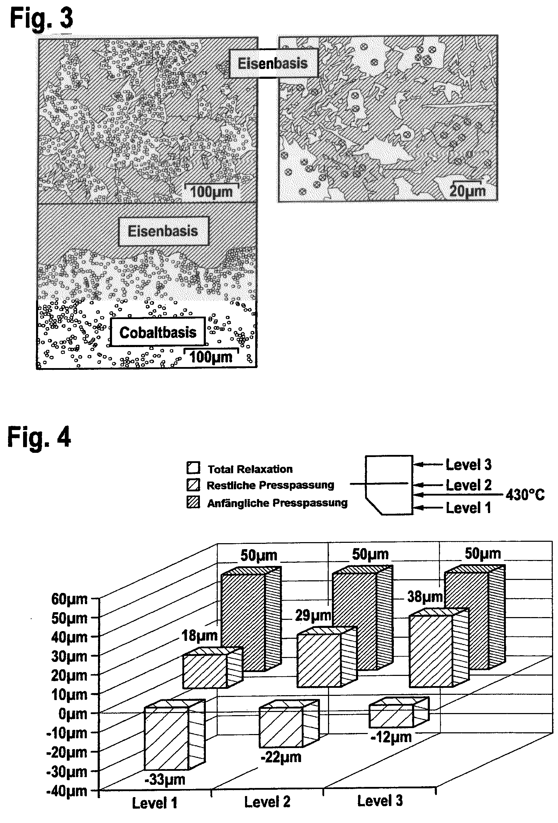

In Fig. 2 und Fig. 3 sind die Gefüge der gesinterten Ventilsitzringe 4 dargestellt. Aus Fig. 2 geht hervor, dass die Grenzschicht zwischen dem zweiten Werkstoff 3 (Febasiert, Basiswerkstoff) und dem ersten Werkstoff 2 (Co-basiert, Funktionswerkstoff) nur ca. 50 bis 100 µm breit ist und dass diese keine Schädigung oder kritische spröde Phasen aufweist, was für eine Anwendung unter sich mechanisch und thermisch sich ändernden Belastungen von besonderer Bedeutung ist.
Wie oben beschrieben, müssen die als Ventilsitzringe 4 ausgebildeten Verbundbauteile 1 mit einer Überdeckung im Zylinderkopf eingebracht werden. Während des Betriebes verläuft ein Wärmestrom vom Ventil/VSR an den Zylinderkopf, was zu einem Temperaturgradienten im VSR 4 führt. In einem homogenen (nicht erfindungsgemäßen) Bauteil nimmt die Relaxation vom Sitzbereich zum Auflagebereich ab, die dann im kalten Zustand am ausgebauten VSR gemessene Überdeckung nimmt in Richtung des Auflagebereiches zu.

Fig. 4 beschreibt die Veränderung bei einer Prüftemperatur von 430 °C an einem gesinterten Co-basierten ersten Werkstoff 2. Im heißen Bereich (level 1) ist die Gesamtrelaxation mit -33 µm am größten, von der ursprünglichen Überdeckung von 50 µm bleiben nach dem Test noch 18 µm übrig. Im Bereich mittlerer Temperaturen (level 2) beträgt die Überdeckung noch 29 µm. Am kalten Ende (level 3) ist die Gesamtrelaxation mit -12 µm am geringsten, entsprechend hoch ist die Endüberdeckung.

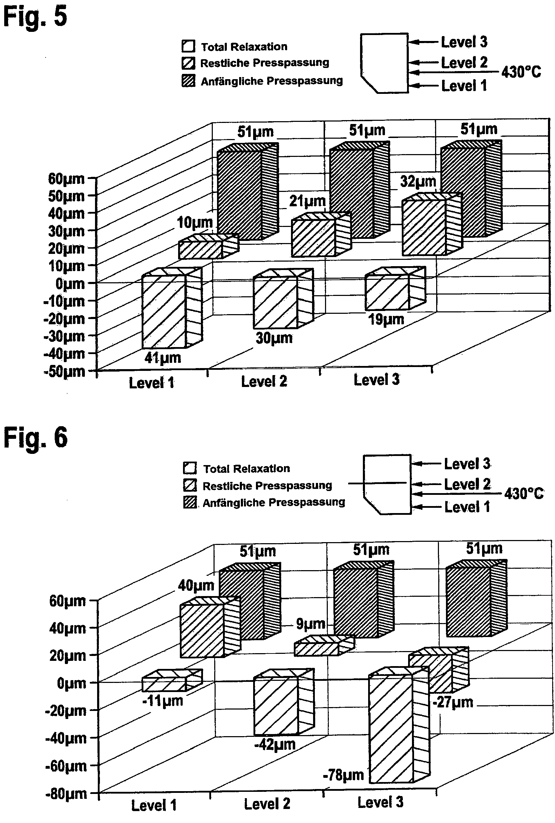

Im Vergleich zum gesinterten ersten Werkstoff 2 (Fig. 4) zeigt Fig. 5 die Ergebnisse zu einem gegossen Material gleicher Zusammensetzung. Dabei zeigt dieser Werkstoff überraschender Weise ein höhere Relaxation in allen Messpositionen (heiß bis kalt bzw. level 1 bis 3). Die Endüberdeckung an level 1 (heiß) beträgt nur 10 µm, im kalten Bereich beträgt die Überdeckung nach dem Versuch (Ausbau) noch 32 µm.

Im Falle ungeeigneter Werkstoffeigenschaften des Fe-basierten Basismaterials (hier ein A17 (Werkstoffnummer: 1.4542 bzw. 17-4 PH), dargestellt in Fig. 6, wurde in allen Temperaturbereichen eine höhere Gesamtrelaxation ermittelt. In der kalten Position (level 3) geht die Überdeckung verloren, was an einem negativen Wert (-27 µm) zu erkennen ist. Dieser Zustand ist wegen des Korrosionsangriffs im Spalt kritisch, und ebenso in Hinblick auf den schrittweisen Verlust der Haftung im Zylinderkopf.

Die geeignete Kombination (Fig. 7) von gesinterten Werkstoffen 2, 3 für den Funktionswerkstoff 2 (erster Werkstoff, hier Co-basiert) und das Basismaterial 3 (zweiter Werkstoff, hier spezieller Fe-basierter Werkstoff) führt zu einer Umkehr der Verhältnisse bei der Überdeckung im Vergleich zum reinen gesinterten Material. Die Überdeckung des ersten Werkstoffes 2 (Funktionswerkstoffes nach dem Ausbau) beträgt auf der kalten Seite (level 1) noch 26 µm verglichen mit 18 µm (Fig. 4) bei der reinen gesinterten bzw. 10 µm bei der gegossen Variante (Fig. 5). Damit ist sichergestellt, dass unter den gewählten experimentellen Bedingungen im Werkstoffverbund der Funktionswerkstoff 2 eine stärkere Presspassung im Zylinderkopf besitzt als der VSR gemäß Stand der Technik.

Ganz allgemein kann der erfindungsgemäße Ventilsitzring 4 aus einem ersten Werkstoff 2 mit ca. 15 bis 30 Gew.-% Molybdän, ca. 5 bis 30 Gew-% Chrom, 0 bis 5 Gew-% Silizium, 0 bis 2 Gew.-% Kohlenstoff, und bis zu 5 Gew.-% andere Elemente und dem Restanteil aus Cobalt, und einem zweiten Werkstoff 3 mit 10-12 Gew.-% Cr, 0,4-0,8 Gew.-% Mn, 0,5-1 Gew-% Si, 0,5-0,9 Gew.-% C, ca. 3 Gew.-% andere Elemente und Rest Fe, hergestellt werden, wobei die beiden Werkstoffe 2,3 zunächst als Metallschmelze zerstäubt werden, bis sie eine mittlere Partikelgröße von ca. 5 bis 13 µm aufweisen. Die nun pulverförmigen Werkstoffe 2, 3 werden dann zu jeweils einem fließfähigen Granulat mit einer Granulatgröße von im Wesentlichen kleiner als < 300 µm, vorzugsweise < 150 µm, und von größer als 15 µm verarbeitet, insbesondere mittels einer Wirbelschichtgranulation, Sprühtrocknung oder Siebgranulation, verarbeitet, wobei ein Anteil von 1 bis 5 Gew.-% organischer Presshilfsmittel, das als Binder zwischen den Pulverpartikel und Gleitmittel dient, und als langkettiger Kohlenwasserstoff (z.B. Paraffin) eingebracht wird. Beide Granulate werden nun nacheinander in ein Presswerkzeug eingefüllt und zwar zuerst der granulierte erste Werkstoff 2 und dann der granulierte zweite Werkstoff 3, und anschließend einachsig mit einem Pressdruck (p) von 400 < p < 700 MPa gepresst.

Die organischen Presshilfsmittel werden durch Erhitzen bei 50 °C < t < 700 °C entfernt, wobei der Ventilsitzring 4 zunächst vorgesintert, insbesondere bei einer Temperatur t von 1.110 °C < t < 1.130 °C, und anschließend fertiggesintert wird, insbesondere bei einer Temperatur t ca. 1.240 °C.

Dabei kann für den ersten Werkstoff 2 auch eine Legierung mit 22-24 Gew.-% Mo, 15-17 Gew.-% Cr, 0,5-1,5 Gew.-% Si, 1,5-2,5 Gew-% Fe, 0,3-1 Gew.-% C, ca. 4 Gew.-% andere Elemente und Rest Co. verwendet werden, insbesondere sogar eine Legierung mit 23 Gew.-% Mo, 16 Gew.-% Cr, 1 Gew.-% Si, 2 Gew-% Fe, 0,5 Gew.%C, ca. 3 Gew.-% andere Elemente und Rest Co.

Für den zweiten Werkstoff 3 wird ein Stahl mit 10-12 Gew.-% Cr, 0,4-0,8 Gew.-% Mn, 0,5-1 Gew-% Si, 0,5-0,9 Gew.-% C, ca. 3 Gew.-% andere Elemente und Rest Fe verwendet, insbesondere eine Legierung mit 11 Gew.-% Cr, 0,6 Gew.-% Mn, 0,7 Gew-% Si, 0,7 Gew.-% C, ca. 2 Gew.-% andere Elemente und Rest Fe.

Das Granulat wird im dem Presswerkzeug mit einem Pressdruck p von 520 MPa gepresst wird, wobei der erste Werkstoff 2 auf eine Dichte von ca. 5,85 g/m³ und der zweite Werkstoff 3 auf eine Dichte von ca. 5,5 g/cm³ zusammengepresst wird. Das Granulat wird dabei im dem Presswerkzeug derart gepresst, dass eine relative Dichte des ersten Werkstoffs 2 bezogen auf den nicht gesinterten Pressling um maximal +/-3% von der relativen Dichte des zweiten Werkstoffs 3 abweicht. Der Ventilsitzring 4 wird ca. 25 bis 35 min in einer N2-H2 Atmosphäre mit einem Anteil an H2 von 5% < H2 < 20% vorgesintert und ca. 50 bis 60 min in einer N2-H2 Atmosphäre mit einem Anteil an H2 von 5% < H2 < 20% fertiggesintert.

Ein Aufheizen beim Vorsintern erfolgt dabei vorzugsweise mit 3 bis 5 °C/min und eine Abkühlung auf Raumtemperatur mit ca. 5 bis 10 °C/min, wogegen ein Aufheizen beim Fertigsintern mit 5 bis 10 °C/min und eine Abkühlung auf Raumtemperatur mit ca. 10 bis 20 °C/min erfolgen. Dabei wird der Ventilsitzring 4 bis zu einer Temperatur von T = 1.100 °C in einer N2-H2 Atmosphäre und bei einer Temperatur von 1.100 °C < T < 1.240 °C unter Vakuum gesintert.

Der derart hergestellte erfindungsgemäße Ventilsitzring 4 weist in einem Temperaturbereich zwischen -40 °C < T < 600 °C folgende Eigenschaften aufweist, eine Wärmeausdehnung von 8.0 -19.5 µm/mK, einen E-Modul von 150-250 GPa und eine Druckdehngrenze von 900 - 2000 MPa. Darüber hinaus weist der Ventilsitzring 4 im Bereich des ersten Werkstoffs 2 eine lineare Schwindung in einer Achsrichtung auf, die maximal +/- 2% einer linearen Schwindung im Bereich des zweiten Werkstoffs 3 beträgt.

## Patentansprüche

1. Verfahren zur Herstellung eines Ventilsitzrings (4) aus einem ersten Werkstoff (2) mit ca. 15 bis 30 Gew.-% Molybdän, ca. 5 bis 30 Gew-% Chrom, 0 bis 5 Gew-% Silizium, 0 bis 2 Gew.-% Kohlenstoff, und bis zu 5 Gew.-% andere Elemente und dem Restanteil aus Cobalt, und einem zweiten Werkstoff (3) mit 10-12 Gew.-% Cr, 0,4-0,8 Gew.-% Mn, 0,5-1 Gew-% Si, 0,5-0,9 Gew.-% C, ca. 3 Gew.-% andere Elemente und Rest Fe, bei dem
- die beiden Werkstoffe (2,3) durch Zerstäuben einer Metallschmelze so verarbeitet werden, dass sie eine mittlere Partikelgröße von ca. 5 bis 13 µm aufweisen,
- die nun pulverförmigen Werkstoffe (2,3) zu jeweils einem fließfähigen Granulat mit einer Granulatgröße von im Wesentlichen kleiner als < 300 µm, vorzugsweise < 150 µm, und von größer als 15 µm verarbeitet werden,
- ein Anteil von 1 bis 5 Gew.-% organischer Presshilfsmittel beigemischt wird,
- beide Granulate nacheinander in ein Presswerkzeug eingefüllt und anschließend einachsig mit einem Pressdruck (p) von 400 < p < 700 MPa gepresst werden,
- die organischen Presshilfsmittel durch Erhitzen bei 50 °C < t < 700 °C entfernt werden,
- der Ventilsitzring (4) vorgesintert und fertiggesintert wird.

2. Verfahren nach Anspruch 1,
**dadurch gekennzeichnet**
**dass** der Ventilsitzring (4) bei einer Temperatur t von 1.110 °C < t < 1.130 °C vorgesintert und bei einer Temperatur t ca. 1.240 °C fertiggesintert wird.

3. Verfahren nach Anspruch 1 oder 2,
**dadurch gekennzeichnet**
**dass** die pulverförmigen Werkstoffe (2,3) mittels Wirbelschichtgranulation, Sprühtrocknung oder Siebgranulation zu jeweils einem fließfähigen Granulat mit einer Granulatgröße von im Wesentlichen kleiner als < 300 µm, vorzugsweise < 150 µm, und von größer als 15 µm verarbeitet, werden.

4. Verfahren nach einem der vorhergehenden Ansprüche,
**dadurch gekennzeichnet**
**dass** für den ersten Werkstoff (2) eine Legierung mit 22-24 Gew.-% Mo, 15-17 Gew.% Cr, 0,5-1,5 Gew.-% Si, 1,5-2,5 Gew-% Fe, 0,3-1 Gew.-% C, ca. 4 Gew.-% andere Elemente und Rest Co. verwendet wird.

5. Verfahren nach einem der vorhergehenden Ansprüche,
**dadurch gekennzeichnet**
**dass** für den zweiten Werkstoff (3) ein Stahl mit 10-12 Gew.-% Cr, 0,4-0,8 Gew.-% Mn, 0,5-1 Gew-% Si, 0,5-0,9 Gew.-% C, ca. 3 Gew.-% andere Elemente und Rest Fe verwendet wird.

6. Verfahren nach einem der vorhergehenden Ansprüche,
**dadurch gekennzeichnet**
**dass** für den ersten Werkstoff (2) eine Legierung mit 23 Gew.-% Mo, 16 Gew.-% Cr, 1 Gew.-% Si, 2 Gew-% Fe, 0,5 Gew.-%C, ca. 3 Gew.-% andere Elemente und Rest Co verwendet wird.

7. Verfahren nach einem der vorhergehenden Ansprüche,
**dadurch gekennzeichnet**
**dass** für den zweiten Werkstoff (3) eine Legierung mit 11 Gew.-% Cr, 0,6 Gew.-% Mn, 0,7 Gew-% Si, 0,7 Gew.-% C, ca. 2 Gew.-% andere Elemente und Rest Fe verwendet wird.

8. Verfahren nach einem der vorhergehenden Ansprüche,
**dadurch gekennzeichnet**
**dass** das Granulat im dem Presswerkzeug mit einem Pressdruck p von 520 MPa gepresst wird, wobei der erste Werkstoff (2) auf eine Dichte von ca. 5,85 g/m³ und der zweite Werkstoff (3) auf eine Dichte von ca. 5,5 g/cm³ zusammengepresst wird.

9. Verfahren nach einem der vorhergehenden Ansprüche,
**dadurch gekennzeichnet**
**dass** das Granulat im dem Presswerkzeug derart gepresst wird, dass eine relative Dichte des ersten Werkstoffs (2) bezogen auf den nicht gesinterten Pressling um maximal +/- 3% von der relativen Dichte des zweiten Werkstoffs (3) abweicht.

10. Verfahren nach einem der vorhergehenden Ansprüche,
**dadurch gekennzeichnet**
**dass** der Ventilsitzring (4) ca. 25 bis 35 min in einer N2-H2 Atmosphäre mit einem Anteil an H2 von 5% < H2 < 20% vorgesintert wird.

11. Verfahren nach einem der vorhergehenden Ansprüche,
**dadurch gekennzeichnet**
**dass** der Ventilsitzring (4) ca. 50 bis 60 min in einer N2-H2 Atmosphäre mit einem Anteil an H2 von 5% < H2 < 20% fertiggesintert wird.

12. Verfahren nach einem der vorhergehenden Ansprüche,
**dadurch gekennzeichnet**
**dass** ein Aufheizen beim Vorsintern mit 3 bis 5 °C/min und eine Abkühlung auf Raumtemperatur mit ca. 5 bis 10 °C/min erfolgen.

13. Verfahren nach einem der vorhergehenden Ansprüche,
**dadurch gekennzeichnet**
**dass** ein Aufheizen beim Fertigsintern mit 5 bis 10 °C/min und eine Abkühlung auf Raumtemperatur mit ca. 10 bis 20 °C/min erfolgen.

14. Verfahren nach einem der vorhergehenden Ansprüche,
**dadurch gekennzeichnet**
**dass** der Ventilsitzring (1) bis zu einer Temperatur von T = 1.100 °C in einer N2-H2 Atmosphäre und bei einer Temperatur von 1.100 °C < T < 1.240 °C unter Vakuum gesintert wird.

15. Ventilsitzring (4), hergestellt nach dem Verfahren nach einem der vorhergehenden Ansprüche, das in einem Temperaturbereich zwischen -40 °C < T < 600 °C folgende Eigenschaften aufweist,
- eine Wärmeausdehnung von 8.0 -19.5 µm/mK,
- einen E-Modul von 150-250 GPa,
- eine Druckdehngrenze von 900 - 2000 MPa.

16. Ventilsitzring nach Anspruch 15,
**dadurch gekennzeichnet,**
**dass** der Ventilsitzring (4) im Bereich des ersten Werkstoffs (2) eine lineare Schwindung in einer Achsrichtung aufweist, die maximal +/- 2% einer linearen Schwindung im Bereich des zweiten Werkstoffs (3) beträgt.
